# EUROPÄISCHE PATENTSCHRIFT

(11) **EP 0 465 411 B1**
(45) Veröffentlichungstag und Bekanntmachung des Hinweises auf die Patenterteilung: **11.05.1994**
(21) Anmeldenummer: 91810469.6
(22) Anmeldetag: 19.06.1991
(51) Int. Cl.: B61B 13/00, B62D 1/26, B61F 9/00, B61B 9/00, B61B 12/12

(54) **Fahrwerk für ein spurgebundenes Fahrzeug**
Travelling gear for a trackbound vehicle
Châssis pour un véhicule guidé

(30) Priorität: 29.06.1990 CH 2181/90
(43) Veröffentlichungstag der Anmeldung: 08.01.1992
(73) Patentinhaber: Mathias Streiff AG, CH-8762 Schwanden GL (CH)
(72) Erfinder: Streiff, Mathias, CH-8762 Schwanden (CH)
(74) Vertreter: Wenger, René

(56) Entgegenhaltungen:
- DE-B- 1 078 156
- FR-A- 2 330 554
- GB-A- 4 281
- Railway Engineer International vol. 5, no. 2, April 1980, Bury St Edmunds, GB Seiten 44 - 46; J. R. Tucker: "Westinghouse people mover system for Gatwick airport"

## Beschreibung

Die Erfindung betrifft ein Fahrwerk für ein spurgebundenes Fahrzeug gemäss dem Oberbegriff von Anspruch 1. Derartige Fahrwerke werden vor allem bei pneubereiften Personenfördersystemen (people mover systems) im Nahverkehr verwendet. Diese Nahverkehrsmittel laufen auf einer Fahrbahn aus Beton oder Stahl, die auch als Hochbahn ausgebildet sein kann. Der Antrieb erfolgt entweder über ein Zugseil, das auf der Fahrbahn geführt ist, oder über einen Antriebsmotor im Fahrzeug.

Es sind bereits gattungsmässig vergleichbare Fahrwerke bekannt, bei denen die Achse der Laufräder auf einem am Gestell fixierten Blattfedernpaar aufliegt. Ein derartiges Fahrwerk wird z.B. beschrieben durch John R. Tucker in "Railway Engineer International", Vol. 5, (1980) März/April, Seiten 44 -46. Die Laufräder sind dabei ausserhalb des Drehkranzes angeordnet. Die seitliche Spursicherung erfolgt bei bekannten Fahrwerken durch horizontal angeordnete Führungsräder, die relativ starr gelagert sind und die gegen eine Seitenführung gepresst werden.

Ein Nachteil der bekannten Fahrwerke besteht insbesondere darin, dass aufgrund der Stellung der Laufräder breite Fahrspuren und damit auch relativ grosse Fahrbahnquerschnitte erforderlich sind. Aus ästhetischen Gründen und auch aus Kostengründen wäre es jedoch vorteilhafter, die Fahrbahnquerschnitte so klein wie möglich zu halten. Die bekannten Fahrwerke haben ausserdem teilweise unbefriedigende Dämpfungs-und Federeigenschaften.

Es ist daher eine Aufgabe der Erfindung, ein Fahrwerk der eingangs genannten Art zu schaffen, das bei kompakter Bauweise und kleiner Spurbreite trotzdem optimale Dämpfungs- und ggf. auch Federeigenschaften aufweist. Diese Aufgabe wird erfindungsgemäss mit einem Fahrwerk gelöst, das die Merkmale im Anspruch 1 aufweist.

Der Wippkörper gewährleistet eine optimale Dämpfung und Federung in vertikaler Richtung. Je nach Art der Federvorrichtung können die Federeigenschaften innerhalb eines bestimmten Spektrums eingestellt werden. Der Wippkörper kann zwischen den Laufrädern untergebracht werden, so dass ein relativ schmaler Radstand möglich ist. Dies erlaubt es auch, die Laufräder innerhalb des Drehkranzes anzuordnen. Der kleine Radstand wirkt sich beim Befahren der Kurven positiv aus. Je nach Beanspruchung könnten mehrere Stossdämpfer zwischen Wippkörper und Gestell angeordnet sein.

Eine besonders gute Verwindungsstabilität wird erreicht, wenn das Gestell eine Plattform zur Aufnahme des Drehkranzes aufweist und wenn der Wippkörper an seinem verschwenkbaren Ende einen quer zur Schwenkebene angeordneten Querträger aufweist, an dessen beiden äusseren Enden je eine Federvorrichtung angeordnet ist, auf welcher die Plattform abgestützt ist. Auf diese Weise werden auch die bei Kurven auftretenden Querkräfte relativ weit aussen in der Nähe der Laufräder aufgenommen. Zur Verminderung von Schlägen und Stössen ist zwischen der Plattform und dem Wippkörper wenigstens ein Stossdämpfer angeordnet. Die Federvorrichtungen sind vorzugsweise Luftfedern, die auf eine bestimmte Federcharakteristik eingestellt werden können. Es könnte sich dabei aber auch um Spiralfedern, Tellerfedern oder dergleichen handeln.

Auf dem Wippkörper kann besonders vorteilhaft eine Bremsvorrichtung angeordnet werden, die unmittelbar auf die Achse oder auf die Räder des Laufradpaars einwirkt. Es wäre auch denkbar, einen Antriebsmotor, wie z.B. einen Elektromotor auf dem Wippkörper zu befestigen.

Vertikale Schwingungen und Stösse können vom Menschen durch die Wirbelsäule relativ gut aufgefangen werden. Von besonderer Bedeutung für den Fahrkomfort ist jedoch auch die Dämpfung von horizontalen Stössen, da diese für die menschliche Wirbelsäule besonders unangenehm sind. Die relativ starren Spurführungen bekannter Fahrwerke vermögen in dieser Beziehung nicht zu befriedigen. Das Problem kann optimal dadurch gelöst werden, dass das Gestell unter dem Drehkranz einen länglichen Führungskörper aufweist und dass am Führungskörper wenigstens ein Führungsradpaar für die seitliche Spursicherung befestigt ist, wobei jedes Führungsrad des Führungsradpaares an einem Querlenker gelagert ist, der vorzugsweise horizontal schwenkbar und federnd am Führungskörper angelenkt ist. Auf diese Weise werden seitliche Stösse durch die Spurführung nicht unmittelbar auf die Fahrzeugkabine übertragen. Die gefederten Querlenker dämpfen derartige Stösse, ohne dass dabei die Spursicherheit beeinträchtigt wird. Zwischen den Querlenkern und dem Führungskörper können ausserdem noch Stossdämpfer angeordnet sein. Die Führungsräder eines Führungsradpaars können auseinandergespannt werden und sich z.B. seitlich an der Fahrbahn für die Laufräder abstützen. Die Führungsräder können aber auch gegeneinandergespannt werden und sich an einer zwischen den Laufrädern geführten Schiene oder dergleichen abstützen.

Sowohl der Wippkörper als auch die Querlenker können so ausgebildet werden, dass bestimmte Notlaufeigenschaften beim Ausfallen eines Laufrades bzw. eines Führungsrades gewährleistet sind. Zu diesem Zweck wird an den frei schwenkbaren Enden des Wippkörpers bzw. der Querlenker je ein Gleitkörper angeordnet, der jedoch die Fahrbahn bei intaktem Rad nicht berührt. Platzt beispielsweise ein Rad, berührt der Gleitkörper die Fahrbahn und gewährleistet eine Spurhaltung des Fahrwerks, bis das Fahrzeug angehalten werden kann.

Am Führungskörper, an dem die Querlenker befestigt sind, kann besonders vorteilhaft eine Seilklemmvorrichtung angeordnet werden. Das Prinzip der Standseilbahn weist bestimmte Vorteile auf, so dass es vor allem bei kurzen Strecken häufig angewendet wird. Es ist nun besonders zweckmässig, wenn das Zugseil nicht einfach fest am Fahrwerk verankert wird. Derartige feste Einspannstellen führen zu hohen Seilbelastungen und häufig zu Drahtbrüchen. Das Klemmen des Seils mittels der Seilklemmvorrichtung hat den Vorteil, dass eine endlose Seilschlaufe eingesetzt werden kann und dass in bestimmten zeitlichen Abständen die Klemmstellen verschoben werden können. Das Seil wird auf diese Weise nie an der gleichen Stelle über längere Zeit belastet.

Weitere Einzelmerkmale und Vorteile der Erfindung ergeben sich aus den Zeichnungen und aus der nach folgenden Beschreibung. Dabei ist zu berücksichtigen, dass insbesondere auch die Kombination einzelner Merkmale zu einem äusserst kompakten und vorteilhaften Fahrwerk führt, das verschiedene Eigenschaften in sich vereinigt. Die Zeichnungen zeigen je ein Ausführungsbeispiel eines seilgezogenen und eines motorgetriebenen Fahrzeuges, wobei das gleiche Fahrwerk eingesetzt wird. Es zeigen:
- Figur 1: ein erfindungsgemässes Fahrwerk in stark vereinfachter, perspektivischer Darstellung, wobei der Wippkörper vom Gestell getrennt ist,
- Figur 2: die Seitenansicht eines seilgezogenen Fahrzeugs mit zwei Fahrwerken,
- Figur 3: eine Draufsicht auf die Fahrwerke gemäss Figur 2,
- Figur 4: eine Seitenansicht eines seilgezogenen Fahrwerks,
- Figur 5: eine Draufsicht auf das Fahrwerk gemäss Figur 4,
- Figur 6: eine Ansicht auf das Fahrwerk in Spurrichtung aus Pfeilrichtung A gemäss Figur 5,
- Figur 7: eine Seitenansicht der Seilklemmvorrichtung in etwas vergrösserter Darstellung,
- Figur 8: einen Querschnitt durch die Seilklemmvorrichtung gemäss Figur 7,
- Figur 9: eine teilweise geschnittene Seitenansicht der Ueberwachungsvorrichtung,
- Figur 10: einen Querschnitt durch die Ueberwachungsvorrichtung gemäss Figur 9,
- Figur 11: einen Wippkörper für ein Fahrwerk mit Motorantrieb, und
- Figur 12: eine Ansicht analog zu Figur 6, jedoch auf ein motorgetriebenes Fahrwerk,
- Figur 13: ein alternatives Ausführungsbeispiel eines Wippkörpers mit Motorantrieb,
- Figur 14: ein alternatives Ausführungsbeispiel eines Führungskörpers für zentrale Führung, und
- Figur 15: ein weiteres Ausführungsbeispiel mit einer alternativen Seilführung.

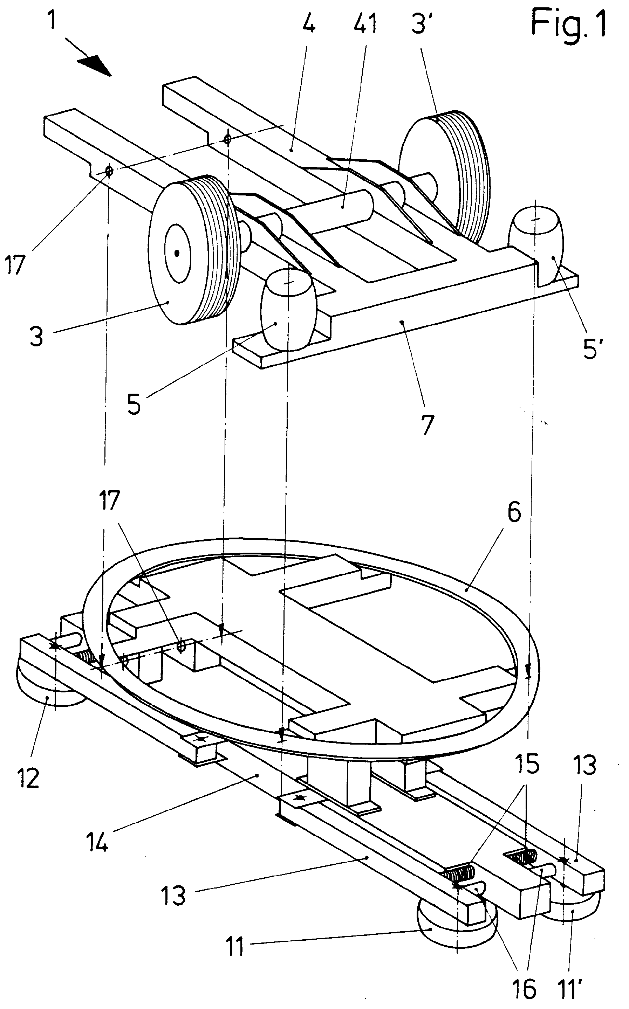

Figur 1 zeigt die wesentlichen Komponenten des nachstehend noch genauer beschriebenen Fahrwerks 1, und zwar übereinander und getrennt dargestellt das am Wippkörper 4 befestigte Laufradpaar 3, 3' und die am Führungskörper 14 angelenkten Führungsradpaare 11, 11' bzw. 12, 12'. Der Wippkörper 4 ist an einem Gelenk 17 unter einer kreisringförmigen Plattform 6 angelenkt. Die Schwenkebene des Wippkörpers verläuft dabei in Fahrtrichtung. Die Plattform 6 dient zur Abstützung des hier nicht dargestellten Drehkranzes. Der Wippkörper 4 weist an seinem freien Ende einen Querträger 7 auf, der an seinen äusseren Enden Federvorrichtungen 5 und 5' trägt. Auf diesen Federvorrichtungen ist die Plattform 6 abgestützt. Die Achse 41 der Laufräder 3 und 3' ist im Wippkörper 4 gelagert. Die Laufräder sind dabei innerhalb der Plattform 6 bzw. innerhalb des daraufliegenden Drehkranzes angeordnet.

Unter der Plattform 6 und fest mit dieser verbunden ist ein länglicher Führungskörper 14 angeordnet. Dieser verläuft wie der Wippkörper 4 ebenfalls in Fahrtrichtung. Am Führungskörper 14 sind auf beiden Seiten Querlenker 13 angelenkt, die vorzugsweise horizontal verschwenkbar sind. Zwischen den freien Enden dieser Querlenker und dem Führungskörper 14 sind Federvorrichtungen 15 angeordnet, welche die Querlenker nach aussen vorspannen. An den Querlenkern sind die Führungsräder 11, 11' bzw. 12, 12' frei drehbar gelagert.

Diese Führungsräder dienen der seitlichen Spursicherung, wie nachstehend noch genauer beschrieben wird. Da jedes Führungsrad separat abgefedert ist, hat das Fahrwerk auch in horizontaler Richtung sehr gute Laufeigenschaften, was höhere Fahrgeschwindigkeiten und damit eine grössere Transportkapazität zulässt.

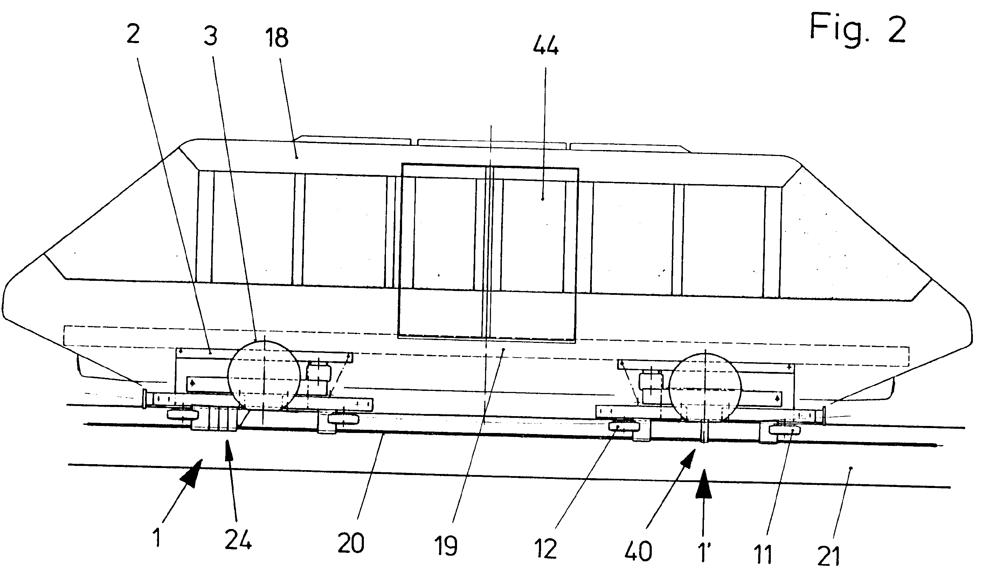

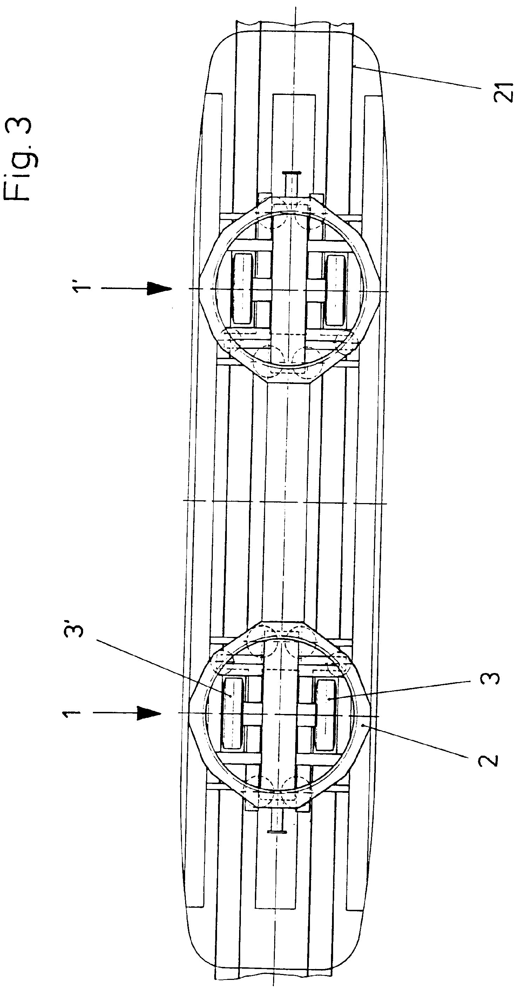

Die Figuren 2 und 3 zeigen ein seilgezogenes Fahrzeug, das mit zwei erfindungsgemässen Fahrwerken 1 und 1' versehen ist. Der Fahrzeugboden 19 ruht auf den Drehkränzen 2 der beiden Fahrwerke. Dieser Boden ist eben ausgebildet, ohne dass komplizierte Radkästen oder dergleichen erforderlich wären. Infolge des kleinen Radstandes sind die Laufräder praktisch vollständig von der Karosserie verschalt und von aussen kaum sichtbar. Auf dem Boden 19 ruht eine Fahrzeugkabine 18 mit einer Eingangstüre 44.

Die Laufräder 3 sind als Pneuräder ausgebildet und laufen auf einer im Querschnitt U-förmigen Fahrbahn 21. Der Antrieb erfolgt über ein Zugseil 20, das innerhalb der Fahrbahn gespannt ist. Das in Fahrtrichtung vordere Fahrwerk 1 ist mit einer Seilklemmvorrichtung 24 versehen, welche das Zugseil 20 klemmend erfasst. Am hinteren Fahrwerk 1' ist das Zugseil lediglich geführt, wird jedoch nicht klemmend erfasst. Das hintere Fahrwerk ist jedoch mit einer Ueberwachungsvorrichtung 40 versehen, die bei schlaffem Seil eine Notbremsung einleitet.

Aus Figur 3 ist die Gesamtanordnung der Fahrzeugabstützung und - führung besonders gut ersichtlich. Die Führungsräder 11 und 12 pressen sich seitlich gegen die Fahrbahn 21 und bewirken so eine Geradeführung der Laufräder 3. Die Führungsräder sind hier ebenfalls als Pneuräder ausgebildet. Es könnten aber auch Vollgummiräder, beschichtete Metallräder oder dergleichen sein. In bestimmten Fällen wäre es selbstverständlich denkbar, dass die Führungsräder wegfallen, weil die Laufräder anderweitig geführt sind. Bei den Laufrädern könnte es sich beispielsweise auch um Schienenräder handeln. Bei einem solchen Fahrwerk würde der Führungskörper 14 entweder ganz wegfallen oder er hätte nur noch die Funktion einer Seilbefestigung.

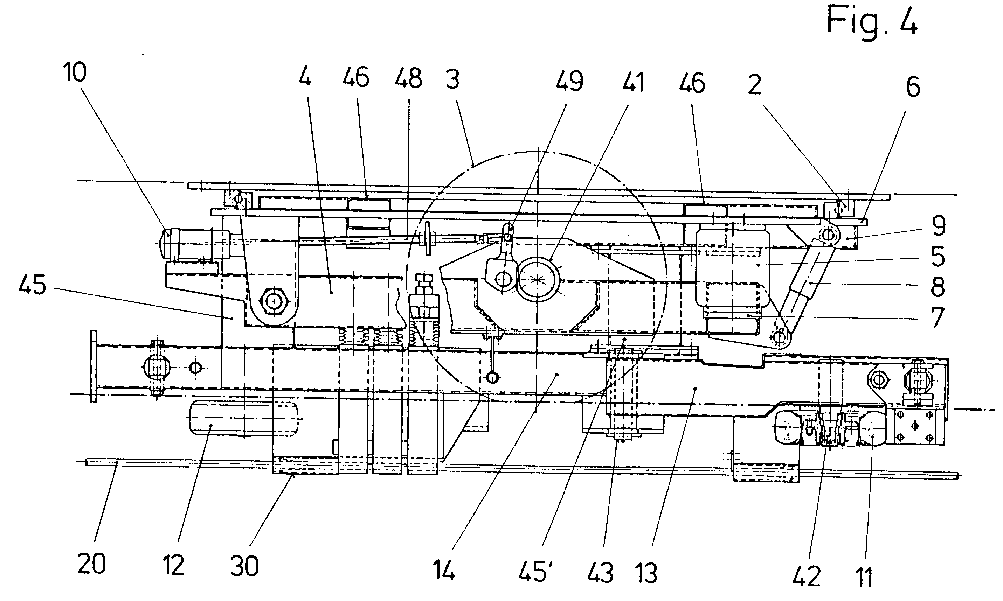

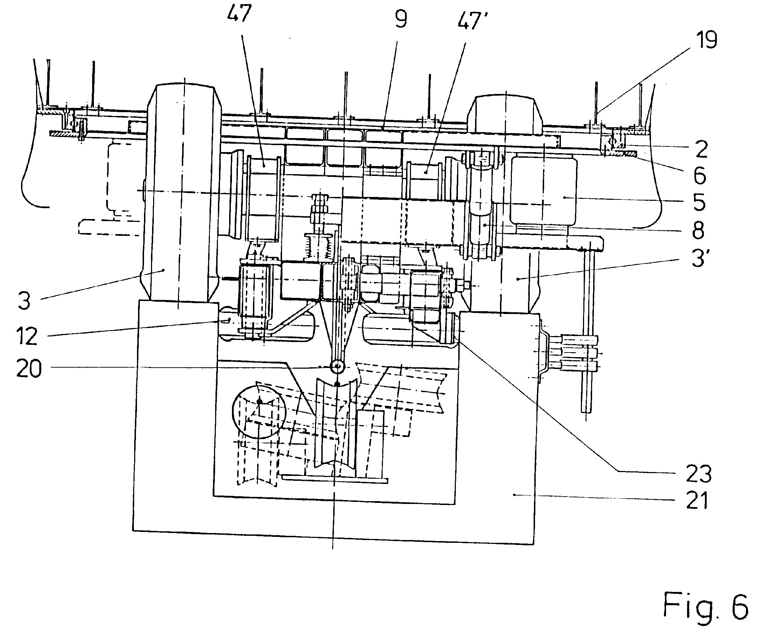

In den Figuren 4 bis 6 ist das Fahrwerk 1 der Figuren 2 und 3 genauer dargestellt. Der Drehkranz 2 von an sich bekannter Bauweise ruht auf der kreisringförmigen Plattform 6. Diese ist zusammen mit dem Führungskörper 14 Bestandteil eines steifen Gestells. Die Plattform 6 ist im Zentrum mit einem Versteifungskörper 9 verstärkt. Dieser besteht aus zusammengeschweissten Hohlprofilen. Auch der Führungskörper 14 besteht aus zusammengeschweissten Hohlprofilen, wie aus Figur 6 ersichtlich ist. Versteifungskörper 9 und Führungskörper 14 haben etwa die gleiche Breite und sind über die beiden Verbindungskörper 45 und 45' im Abstand miteinander verbunden. Zwischen der Plattform 6 und dem Versteifungskörper 9 sind noch Seitenversteifungen 46 eingeschweisst.

Der Wippkörper 4 ist an einem Gelenk 17 am Verbindungskörper 45 angelenkt. Der Wippkörper besteht aus zwei parallelen Längsträgern 47 und 47' sowie aus dem Querträger 7. Die beiden Verbindungskörper 45 und 45' liegen zwischen diesen beiden Längsträgern.

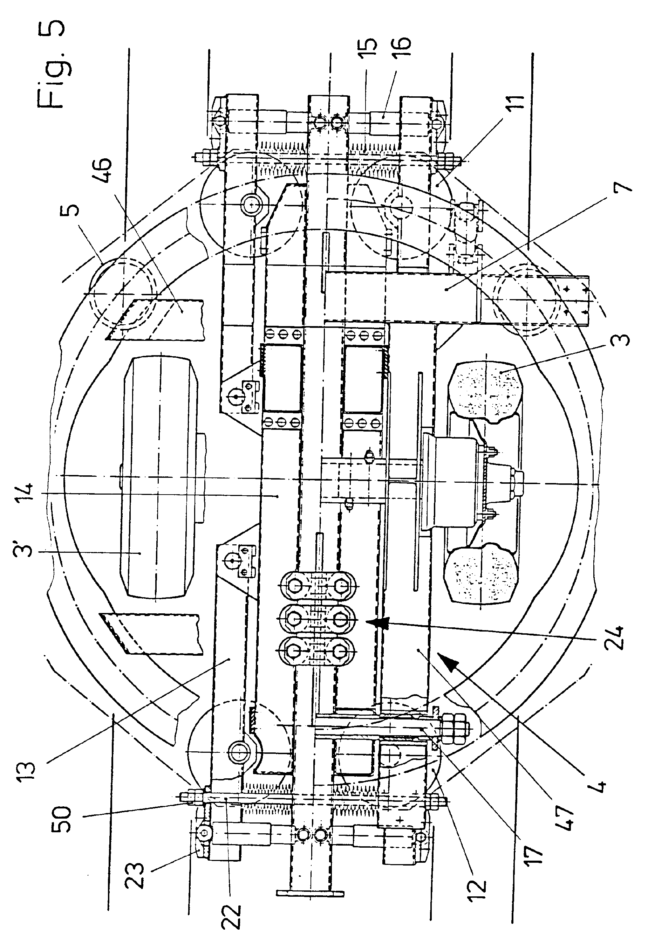

An den äusseren Enden des Querträgers 7 ist je eine Luftfeder 5 angeordnet, auf welchen die Plattform 6 abgestützt ist. Wie insbesondere aus Figur 5 ersichtlich ist, liegen die Federungspunkte relativ weit entfernt vom Zentrum des Fahrwerks und noch ausserhalb der Laufräder 3, 3', was eine besonders günstige Federung bewirkt.

Die Achse 41 der Laufräder 3 und 3' ist in den beiden Längsträgern 47 und 47' des Wippkörpers 4 gelagert. Die Achse verläuft dabei etwa durch das Zentrum des Drehkranzes 3. Wie aus den Figuren 4 und 6 ersichtlich ist, ragen die Laufräder oben noch etwas über den Drehkranz hinaus in den Boden 19.

Etwas innerhalb der beiden Luftfedern 5 ist zwischen dem Querträger 7 und der Plattform 6 ein Stossdämpferpaar 8 angelenkt, welches Schläge und Stösse in vertikaler Richtung dämpft. Der Wippkörper 4 dient besonders vorteilhaft zur Lagerung bestimmter Hilfseinrichtungen. Wie aus Figur 4 ersichtlich ist, kann z.B. eine pneumatische Bremsvorrichtung 10 auf dem Wippkörper montiert sein. Diese wirkt über ein Gestänge 48 und einen Bremshebel 49 unmittelbar auf die Achse 41 der Laufräder ein und dient dazu, das Fahrzeug in einer Notsituation, z.B. bei einem Seilbruch oder beim Versagen eines Lauf- oder Führungsrades, anzuhalten. Es wäre aber auch ohne weiteres denkbar, auf dem Wippkörper 4 einen Antriebsmotor, z.B. einen Elektromotor für den Antrieb der Achse 41 anzuordnen, wie nachstehend noch beschrieben wird.

Am Führungskörper 14 sind auf beiden Seiten der Laufradachse 41 an den Gelenken 43 die Querlenker 13 angelenkt. An vertikalen Achsen 42 sind die Führungsräder 11, 11' bzw. 12, 12' gelagert. Diese Achsen 42 liegen etwa im Radiusbereich des Drehkranzes 2. Je zwei benachbarte Querlenker 13 werden von einer Zugstange 22 durchdrungen. An dieser Stelle ist der Führungskörper 14 etwas schmaler ausgebildet und besteht nur noch aus einem einzigen Hohlprofil. Auf der Zugstange zwischen dem Führungskörper 14 und den Querlenkern 13 sind Tellerfedern 15 aufgeschichtet, welche die Querlenker nach aussen gegen die Fahrbahn 21 vorspannen. An beiden Enden der Zugstange sind Muttern 50 angeordnet, an denen die Vorspannung der Führungsräder eingestellt werden kann. Zwischen den Querlenkern 13 und dem Führungskörper 14 sind ebenfalls Stossdämpfer 16 angelenkt, welche Schläge und Stösse in horizontaler Richtung dämpfen. Auf der Aussenseite der Querlenker sind Gleitkörper 23 derart angeordnet, dass sie anstelle eines Führungsrades vorübergehend die Spursicherung übernehmen könnten. Platzt beispielsweise ein Führungsrad, so wird der Gleitkörper durch die Federkraft der Tellerfedern 15 gegen die Fahrbahn gepresst. Gleichzeitig wird, ausgelöst durch einen Sensor, mit Hilfe der Bremsvorrichtung 10 eine Notbremsung eingeleitet. Der Gleitkörper 23 ist in der Lage, das Fahrwerk bis zum Stillstand auf der Fahrbahn 21 zu halten. Aehnliche Gleitkörper können auch unter dem Wippkörper 4 angeordnet sein, um beim Ausfall eines Laufrades ein Abkippen des Fahrzeuges zu verhindern.

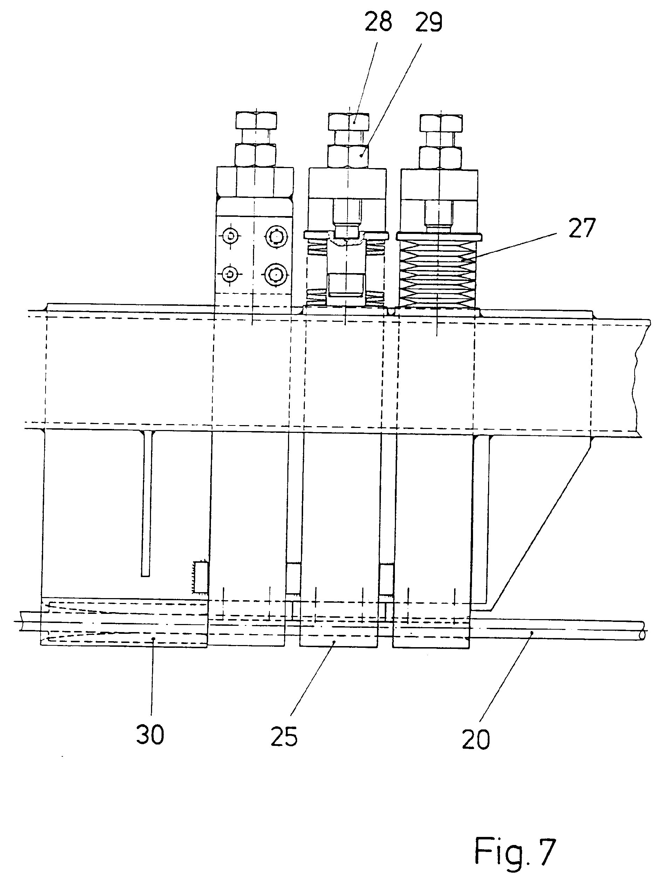

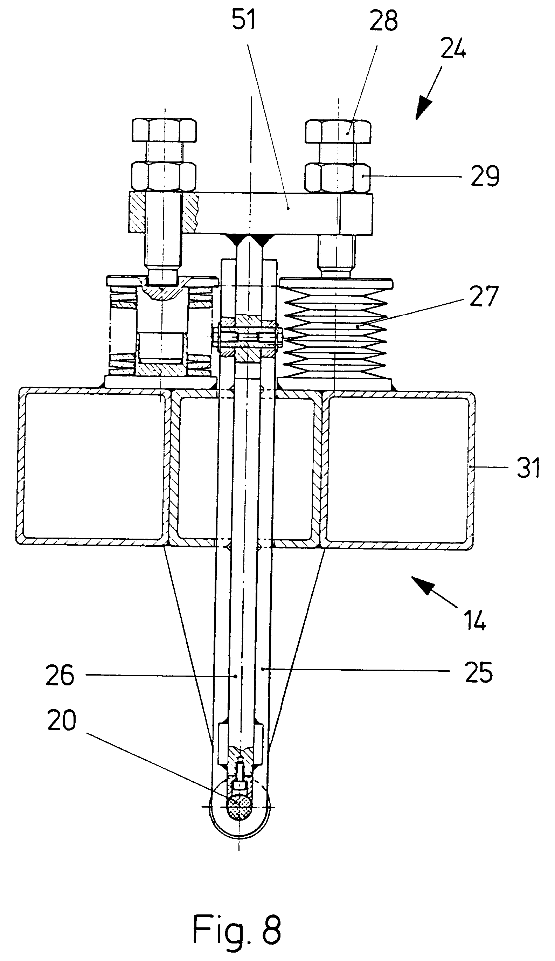

Das Zugseil 20 ist am Fahrwerk mit Hilfe einer in den Figuren 7 und 8 genauer dargestellten Seilklemmvorrichtung 24 befestigt. In Figur 8 sind die einzelnen Hohlprofile 31 des Führungskörpers 14 deutlich sichtbar. Die Seilklemmvorrichtung besteht aus einzelnen U-förmigen Seilklemmbügeln 25, welche den Führungskörper durchdringen. Die Seilklemmbügel sind oben mit einem T-Stück 51 verbunden, an dem auf beiden Seiten Stellschrauben 28 eingeschraubt sind, die mit Gegenmuttern 29 arretiert werden können. Auf beiden Seiten der Seilklemmbügel 25 sind Federpakete 27 angeordnet, welche über die Stellschrauben 28 die Bügel nach oben vorspannen. Die Vorspannkraft kann dabei mit Hilfe der Stellschrauben 28 eingestellt werden.

Die Seilklemmbügel 25 sind an einem Klemmstück 26 geführt, das schwertartig mehrere Seilklemmbügel 25 durchdringt und das fest auf der Unterseite des Führungskörpers 14 befestigt ist. Das Zugseil 20 liegt im tiefsten Punkt der Seilklemmbügel 25 und wird durch die Federkraft gegen das Klemmstück 26 gepresst.

Diese Seilklemmvorrichtung hat den Vorteil, dass das als endlose Schlaufe ausgebildete Zugseil an beliebigen Stellen festgeklemmt werden kann, so dass eine gleichmässige Beanspruchung des Seils erfolgt. Die Klemmkraft kann ausserdem so eingestellt werden, dass beim Ueberschreiten einer bestimmten Zugkraft das Zugseil durch die Seilklemmvorrichtung gezogen wird. Dadurch würde z.B. die Wirkung einer Kollision des Fahrzeugs mit einem Hindernis auf der Fahrbahn abgeschwächt. Das Zugseil wird über eine Führungstrompete 30 in die Seilklemmvorrichtung eingeführt. Dadurch werden schädliche Knikkungen oder Reibungen bei einer leichten Seilkrümmung verhindert. Die Fixierung des Zugseiles erfolgt worzugsweise zwischen den Achsen der vorderen Führungsräder 12, 12'. Auf diese Weise wird das Seil immer im Zentrum des Fahrwerks gehalten, auch wenn das Fahrwerk sich beim Befahren einer Kurve im Drehkranz dreht.

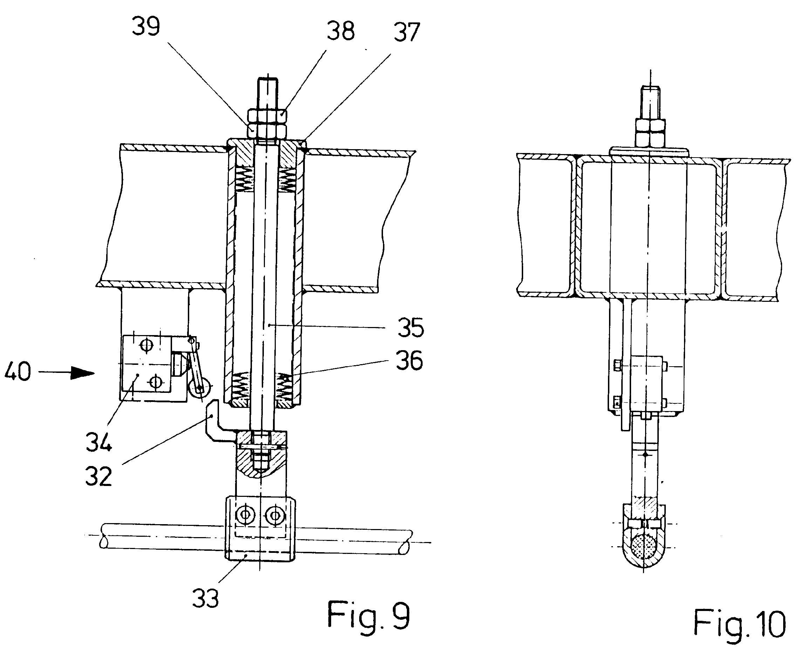

In den Figuren 9 und 10 ist die am hinteren Fahrwerk 1' vorgesehene Ueberwachungsvorrichtung 40 dargestellt. Diese besteht aus einem Fühler 32, der mit einer Seilbride 33 am Zugseil 20 befestigt ist. Der Fühler ist an einer Führungsstange 35 in vertikaler Richtung geführt und wird durch ein Federpaket 36 nach oben vorgespannt. Die Führungsstange 35 ragt oben durch den Zentrierzapfen 37 und ist mit einer Mutter 39 versehen, an welcher die Vorspannkraft eingestellt werden kann. Die Sicherung erfolgt mit einer Gegenmutter 38. Bei normalem Betrieb wird der Fühler 32 durch die Spannkraft des Zugseiles nach unten gezogen und in einer neutralen Betriebsstellung festgehalten. Sobald die Seilspannung z.B. bei einem Seilbruch nachlässt, wird der Fühler infolge der Federkraft des Federpaktetes 36 nach oben gezogen, wobei er eine Schaltvorrichtung 34 betätigt. Die Schaltvorrichtung ist beim Ausführungbeispiel ein Mehrwegventil, das den Druck auf die pneumatische Bremsvorrichtung 10 freigibt.

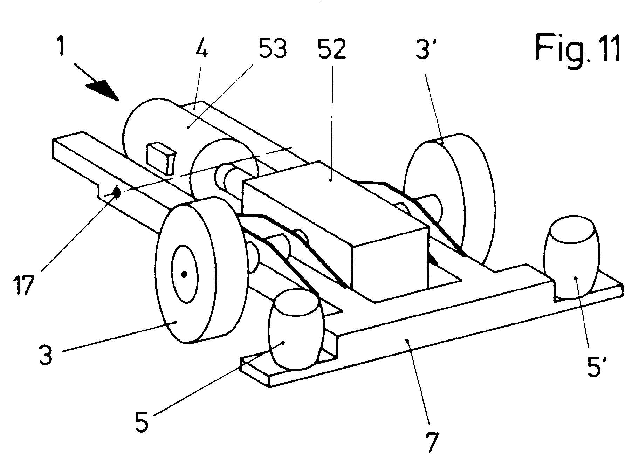

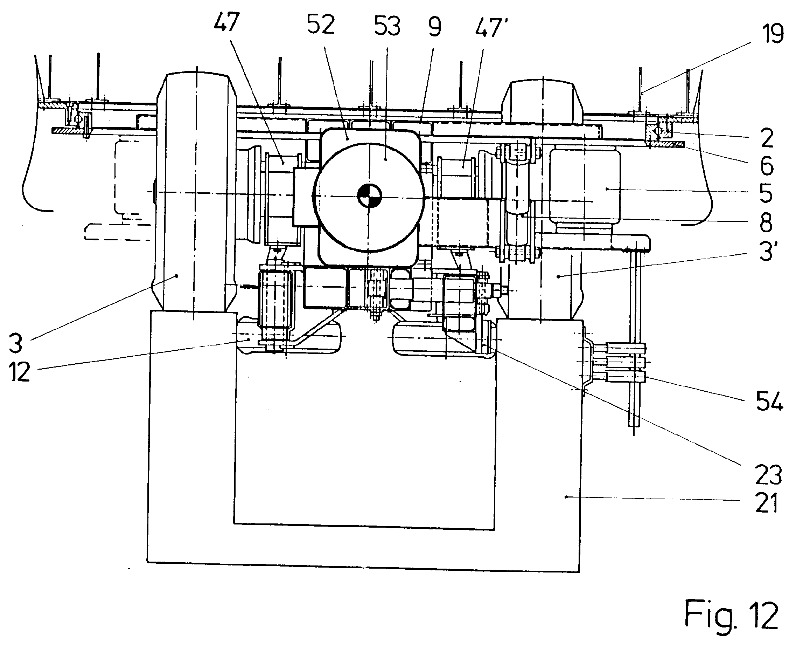

In den Figuren 11 und 12 ist ein Ausführungsbeispiel eines Fahrwerks mit Motorantrieb dargestellt. Figur 11 zeigt dabei lediglich den Wippkörper in perspektivischer Darstellung, auf dem ein Motor 53, z.B. ein Elektromotor angeordnet ist. Der Antrieb des Laufradpaars 3, 3' erfolgt über ein Differentialgetriebe 52, das zwischen den Laufrädern angeordnet ist. Aus Platz- oder Gewichtsgründen könnte auch jedem Laufrad ein kleinerer Motor mit einem eigenen Getriebe zugeordnet sein. Ersichtlicherweise ist beim Motorantrieb die Achse der Laufräder nicht durchgehend, sondern jedes Laufrad besitzt einen eigenen Achsstummel.

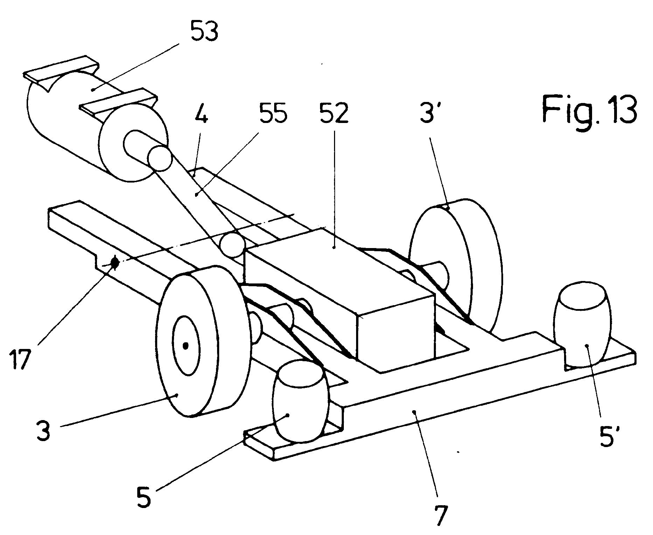

Wie insbesondere aus Figur 12 ersichtlich ist, können Motor und Getriebe auf diese Weise sehr vorteilhaft unter der Fahrzeugkabine angeordnet werden. Wie aus Figur 13 ersichtlich ist, muss der Motor 53 nicht unbedingt dem Fahrwerk zugeordnet sein. Er könnte auch relativ zum Fahrwerk feststehend unter dem Kabinenboden aufgehängt sein. Der Antrieb des Differentialgetriebes 52 erfolgt dann über eine Kardanwelle 55. Die Stromversorgung des Motors 53 erfolgt über eine Stromschiene 54, die allerdings auch bei der seilgezogenen Version für die Stromversorgung der Beleuchtung, Steuergeräte usw. erforderlich ist.

Selbstverständlich muss die Fahrbahn 21 nicht genau die in den Zeichnungen dargestellte Konfiguration aufweisen und sie muss auch nicht unbedingt aus Beton gefertigt sein. Denkbar und in der Praxis auch bereits eingesetzt sind auch Fahrbahnen aus Stahl, z.B. in der Form von parallel angeordneten Doppel-T-Trägern. In einem derartigen Fall würden lediglich die Führungsräder 11, 12 einen etwas anderen Schwenkbereich haben, da die Stahlträger eine andere Querschnittsform aufweisen, als die Betonschiene.

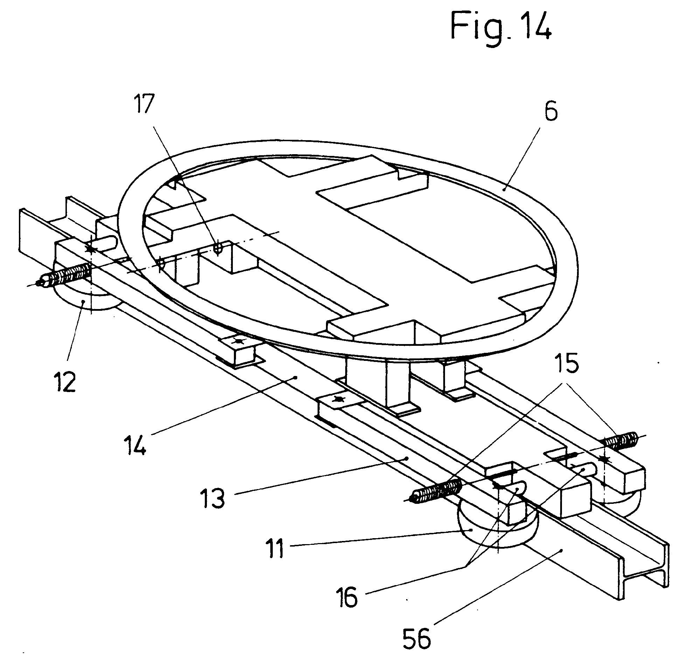

Figur 14 zeigt die Variante eines Führungskörpers 14, bei dem die Querlenker 13 nicht nach aussen, sondern nach innen gegen eine zwischen den Führungsrädern 11, 11' liegende Führungsschiene 56 gepresst werden. Diese kann als Stahlprofil oder als Betonband ausgebildet sein. Diese Lösung eignet sich vor allem bei motorgetriebenen Fahrwerken, bei denen kein Seil unter der Fahrbahn geführt werden muss. Die Federvorrichtungen 15 greifen aussen an den Querlenkern -13 an. Im übrigen ist der Aufbau des Fahrwerks jedoch gleich wie beim vorher beschriebenen Ausführungsbeispiel.

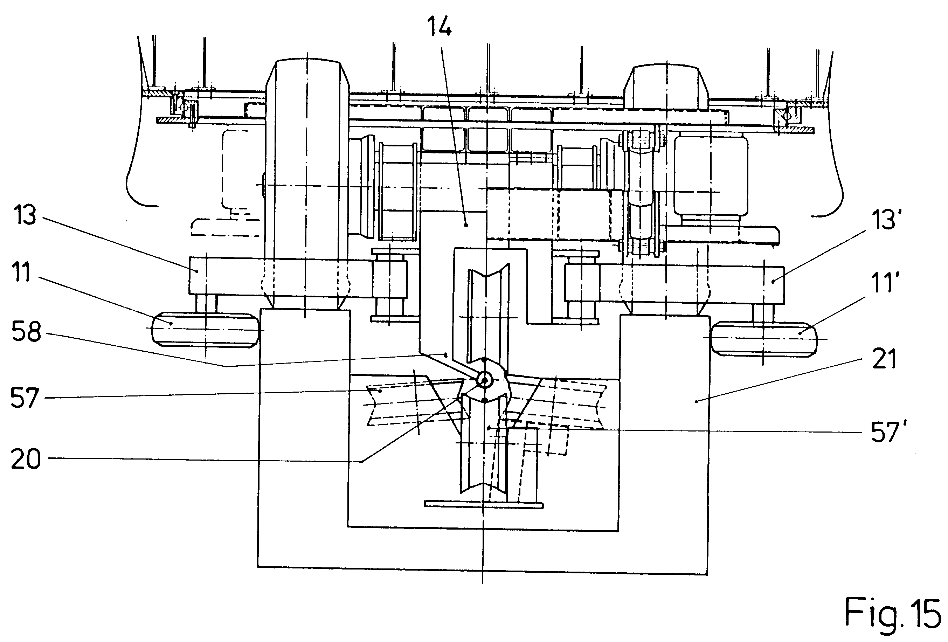

Figur 15 zeigt die Variante eines Führungskörpers 14, bei welchem das Zugseil 20 in vier Richtungen ablenkbar ist, um allseitige Kurven befahren zu können. Zu diesem Zweck können die Zugseilrollen 57 in horizontaler, vertikaler oder schräger Lage rund um das Zugseil angeordnet sein. Zu diesem Zweck ist eine asymmetrische Seilführung 58 nötig. Im Gegensatz zur Figur 6 können die Querlenker 13 mit den Führungsrollen 11 von aussen an die Fahrbahn 21 angepresst werden, wie dies bereits die Figur 14 mit der Führungsschiene 56 zeigt.

## Patentansprüche

1. Fahrwerk (1) für ein spurgebundenes Fahrzeug mit einem Gestell, auf dem ein Drehkranz zur drehbaren Abstützung eines Fahrzeugaufbaus angeordnet ist, und mit einem federnd am Gestell befestigten Radlager, in dem wenigstens ein Laufradpaar gelagert ist, dadurch gekennzeichnet, dass das Radlager ein Wippkörper (4) ist, der auf einer Seite vertikal schwenkbar am Gestell angelenkt ist und der auf der anderen Seite über eine Federvorrichtung (5, 5') federnd mit dem Gestell verbunden ist, wobei das Laufradpaar (3, 3') derart am Wippkörper (4) gelagert ist, dass es innerhalb des Drehkranzes angeordnet ist.

2. Fahrwerk nach Anspruch 1, dadurch gekennzeichnet, dass das Gestell eine Plattform (6) zur Aufnahme des Drehkranzes aufweist, und dass der Wippkörper (4) an seinem verschwenkbaren Ende einen quer zur Schwenkebene angeordneten Querträger (7) aufweist, an dessen beiden äusseren Enden je eine Federvorrichtung (5, 5') angeordnet ist, auf welcher die Plattform (6) abgestützt ist.

3. Fahrwerk nach Anspruch 1 oder 2, dadurch gekennzeichnet, dass zwischen dem Gestell bzw. der Plattform (6) und dem Wippkörper (4) wenigstens ein Stossdämpfer (8) angeordnet ist.

4. Fahrwerk nach Anspruch 2 oder 3, dadurch gekennzeichnet, dass die Federvorrichtungen (5, 5') Luftfedern sind.

5. Fahrwerk nach einem der Ansprüche 2 bis 4, dadurch gekennzeichnet, dass die Plattform (6) kreisringförmig ausgebildet ist und dass diese einen durch das Zentrum verlaufenden Versteifungskörper (9) aufweist, wobei die Laufräder (3, 3') in den beiden segmentförmigen Zwischenräumen zwischen dem Versteifungskörper und dem Innenradius der Plattform angeordnet sind.

6. Fahrwerk nach einem der Ansprüche 1 bis 5, dadurch gekennzeichnet, dass auf dem Wippkörper (4) eine auf die Achse (41) oder auf die Laufräder (3, 3') einwirkende Bremsvorrichtung (10) angeordnet ist.

7. Fahrwerk nach einem der Ansprüche 1 bis 6, dadurch gekennzeichnet, dass das Gestell unter dem Drehkranz einen Führungskörper (14) aufweist, und dass am Führungskörper wenigstens ein Führungsradpaar (11, 11') für die seitliche Spursicherung befestigt ist, wobei jedes Führungsrad (11, 11') des Führungsradpaars an einem Querlenker (13) gelagert ist, der vorzugsweise horizontal schwenkbar und federnd am Führungskörper (14) angelenkt ist.

8. Fahrwerk nach Anspruch 7, dadurch gekennzeichnet, dass zwischen den Querlenkern (13) und dem Führungskörper (14) je ein Stossdämpfer (16) angeordnet ist.

9. Fahrwerk nach Anspruch 7 oder 8, dadurch gekennzeichnet, dass zwei Führungsradpaare (11, 11', 12, 12') am Führungskörper (14) angeordnet sind, und dass die Achsen (42) der Führungsräder etwa im Radiusbereich des Drehkranzes angeordnet sind.

10. Fahrwerk nach einem der Ansprüche 7 bis 9, dadurch gekennzeichnet, dass die beiden Querlenker eines Führungsradpaars von einer gemeinsamen Zugstange (22) durchdrungen werden, welche die Schwenkbewegung begrenzt, und dass zwischen den Querlenkern und dem Führungskörper je ein durch die Zugstange gehaltenes Federscheibenpaket angeordnet ist.

11. Fahrwerk nach einem der Ansprüche 7 bis 10, dadurch gekennzeichnet, dass an den Enden der Querlenker je ein Gleitkörper (23) derart angeordnet ist, dass er bei einem Wegfall oder bei einer Durchmesserverringerung des Führungsrades temporär die Spursicherung übernimmt.

12. Fahrwerk nach einem der Ansprüche 7 bis 11, dadurch gekennzeichnet, dass der Wippkörper (4) zwischen dem Führungskörper (14) und dem Drehkranz am Gestell angeordnet ist.

13. Fahrwerk nach einem der Ansprüche 7 bis 12, dadurch gekennzeichnet, dass am Führungskörper (14) eine Seilklemmvorrichtung (24) zur Befestigung eines Zugseiles (20) angeordnet ist.

14. Fahrwerk nach Anspruch 13, dadurch gekennzeichnet, dass die Seilklemmvorrichtung mehrere hintereinander angeordnete U-förmige Seilklemmbügel (25) aufweist, die den Führungskörper (14) durchdringen, wobei in jedem Seilklemmbügel ein Klemmstück (26) angeordnet ist, und wobei die Klemmkraft zwischen Seilklemmbügel und Klemmstück an einer auf dem Führungskörper angeordneten Spannvorrichtung einstellbar ist.

15. Fahrwerk nach Anspruch 13 oder 14, dadurch gekennzeichnet, dass das Seil über eine am Führungskörper (14) befestigte Führungstrompete (30) in die Seilklemmvorrichtung (24) eingeführt wird.

16. Fahrwerk nach einem der Ansprüche 13 bis 15, dadurch gekennzeichnet, dass am Führungskörper (14) eine Ueberwachungsvorrichtung (40) zur Kontrolle der Seilspannung angeordnet ist.

17. Fahrwerk nach Anspruch 16, dadurch gekennzeichnet, dass die Ueberwachungsvorrichtung einen unter Federvorspannung stehenden, am Zugseil (20) fixierbaren Fühler (32) aufweist, der unter dem Einfluss der Seilspannung in einer neutralen Lage fixierbar ist und der beim Nachlassen der Seilspannung eine Schaltvorrichtung (34) aktiviert.

18. Fahrwerk nach einem der Ansprüche 1 bis 5, dadurch gekennzeichnet, dass auf dem Wippkörper (4) wenigstens ein direkt oder indirekt auf die Achse (41) oder auf die Laufräder (3, 3') einwirkender Antriebsmotor (53) angeordnet ist.

19. Fahrwerk nach einem der Ansprüche 1 bis 5, dadurch gekennzeichnet, dass am Fahrzeugaufbau relativ zum Fahrwerk feststehend wenigstens ein Antriebsmotor (53) angeordnet ist und dass der Antrieb auf die Achse (41) oder auf die Laufräder (3, 3') direkt oder indirekt über eine kardanwelle (55) erfolgt.

20. Fahrwerk nach einem der Ansprüche 7 bis 12, dadurch gekennzeichnet, dass die Führungsräder eines Führungsradpaars zum Abstützen an einer dazwischen liegenden Führungsschiene (56) gegeneinander gerichtet vorgespannt sind.

## Claims

1. Bogie (1) for a track-guided vehicle with a frame on which a slewing ring is arranged for the rotational support of a vehicle structure, and with a sprung wheel mounting attached to the frame, in which at least one pair of running wheels is mounted, characterized in that the wheel mounting is a rocking frame (4) which is linked to be able to pivot vertically on the frame on one side and which is connected with spring action to the frame by a spring device (5, 5') on the other side, the pair of running wheels (3, 3') being mounted on the rocking frame (4) in such a way that it is arranged within the slewing ring.

2. Bogie according to claim 1, characterized in that the frame possesses a platform (6) for accommodation of the slewing ring and that the rocking frame (4) possesses, on its pivotable end, a transverse bar (7) arranged transversly to the plane of pivoting, a spring device (5, 5`,), on which the platform (6) is supported, being arranged at both the outer ends of said transverse bar.

3. Bogie according to claims 1 or 2, characterized in that at least one shock absorber (8) is arranged between the frame, respectively the platform (6) and the rocking frame (4).

4. Bogie according to claims 2 or 3, characterized in that the spring devices (5, 5') are pneumatic springs.

5. Bogie according to one of the claims 2 to 4, characterized in that the platform (6) has an annular form and that said platform possesses a crosstie (9) running through its centre, the running wheels (3, 3') being arranged in both the segment-shaped intermediate spaces between the crosstie and the inner radius of the platform.

6. Bogie according to one of the claims 1 to 5, characterized in that a braking device (10) is arranged on the rocking body (4), said braking device taking effect on the axle (41) or on the running wheels (3, 3').

7. Bogie according to one of the claims 1 to 6, characterized in that the frame beneath the slewing ring possesses a guide body (14) and that at least one guide wheel pair (11, 11') for lateral tracking stability is attached to the guide body, each guide wheel (11, 11') of the guide wheel pair being mounted on a transverse link (13) which is preferably linked on the guide body (14) with spring action to be able to pivot horizontally.

8. Bogie according to claim 7, characterized in that a shock absorber (16) is in each case arranged between the transverse links (13) and the guide body (14).

9. Bogie according to claims 7 and 8, characterized in that two guide wheel pairs (11, 11', 12, 12') are arranged on the guide body (14) and that the axles (42) of the guide wheels are arranged approximately in the area of the slewing ring radius.

10. Bogie according to one of the claims 7 to 9, characterized in that both the transverse links of a guide wheel pair are penetrated by a common tie rod (22) which limits the pivoting movement, and that an assembly of disk springs, held by the tie rod, is in each case arranged between the transverse links and the guide body.

11. Bogie according to one of the claims 7 to 10, characterized in that a sliding block (23) is arranged on the end of each transverse link in such a way that it will temporarily assume tracking stability in the case of detachment of or reduction in diameter of a guide wheel.

12. Bogie according to one of the claims 7 to 11, characterized in that the rocking frame (4) is arranged between the guide body (14) and the slewing ring on the frame.

13. Bogie according to one of the claims 7 to 12, characterized in that a cable clamping device (24) for fastening of a traction cable (20) is arranged on the guide body (14).

14. Bogie according to claim 13, characterized in that the cable clamping device possesses a plurality of U-shaped clamping shackles (25) which pass through the guide body (14), a clamping piece (26) being arranged in each cable clamping bracket, the clamping force between clamping piece and clamping bracket being able to be adjusted at a clamping assembly which is arranged on the guide body.

15. Bogie according to claims 13 or 14, characterized in that the cable is led into the cable clamping device (24) via a guide trumpet (30) which is attached to the guide body (14).

16. Bogie according to one of the claims 13 to 15, characterized in that a monitoring device (40) for controlling cable tension is arranged on the guide body (14).

17. Bogie according to claim 16, characterized in that the monitoring device possesses a spring tensioned feeler (32) which is able to be fixed to the traction cable (20) and which is able to be fixed in a neutral position under the influence of cable tension and which activates a switching device (34) in the case of a reduction in cable tension.

18. Bogie according to one of the claims 1 to 5, characterized in that at least one drive motor (53) acting directly or indirectly on the axle (41) or on the running wheels (3, 3') is arranged on the rocking frame (4).

19. Bogie according to one of the claims 1 to 5, characterized in that at least one drive motor (53), firmly fixed in relation to the bogie, is arranged on the vehicle structure, and that the drive to the axle (41) or to the running wheels (3, 3') ensues directly or indirectly via a universal drive shaft (55).

20. Bogie according to one of the claims 7 to 12, characterized in that the guide wheels of one pair of guide wheels, in order to be supported against a guide rail (56) running between them, are pretensioned and aligned toward one another.

## Revendications

1. Structure de roulement (1) pour un véhicule guidé, comportant un châssis, sur lequel est disposée une couronne pivotante pour soutenir en rotation une superstructure de véhicule, et comportant un support de roues fixé élastiquement au châssis et dans lequel au moins une paire de roues porteuses est montée, caractérisée en ce que le support de roues est un corps oscillant (4) qui, d'un côté, est articulé au châssis de façon à pouvoir pivoter dans un plan vertical et qui, de l'autre côté, est relié élastiquement au châssis, par l'intermédiaire d'un dispositif à ressorts (5, 5'), la paire de roues porteuses (3, 3') étant montée sur le corps oscillant (4) d'une manière telle qu'elle se trouve disposée à l'intérieur de la couronne pivotante.

2. Structure de roulement selon la revendication 1, caractérisée en ce que le châssis présente une plate-forme (6) destinée à recevoir la couronne pivotante, et en ce que le corps oscillant (4) comporte, à son extrémité déplaçable par pivotement, une traverse (7) disposée transversalement au plan de pivotement, à chacune des deux extrémités extérieures de laquelle se trouve un dispositif à ressort (5, 5') sur lequel la plate-forme (6) s'appuie.

3. Structure de roulement selon la revendication 1 ou 2, caractérisée en ce qu'au moins un amortisseur de chocs (8) est disposé entre le châssis ou la plate-forme (6) et le corps oscillant (4).

4. Structure de roulement selon la revendication 2 ou 3, caractérisée en ce que les dispositifs à ressorts (5, 5') sont des ressorts pneumatiques.

5. Structure de roulement selon l'une des revendications 2 à 4, caractérisée en ce que la plate-forme (6) est réalisée sous la forme d'un anneau circulaire et en ce qu'elle présente une pièce de renforcement (9) passant par le centre, les roues porteuses (3, 3') étant disposées dans les deux espaces intercalaires, en forme de segments, définis entre la pièce de renforcement et la circonférence intérieure de la plate-forme.

6. Structure de roulement selon l'une des revendications 1 à 5, caractérisée en ce qu'un dispositif de freinage (10), agissant sur l'essieu (41) ou sur les roues porteuses (3, 3'), est monté sur le corps oscillant (4).

7. Structure de roulement selon l'une des revendications 1 à 6, caractérisée en ce que le châssis présente, sous la couronne pivotante, un corps de guidage (14), et en ce qu'au moins une paire de roues de guidage (11, 11') est fixée au corps de guidage pour le maintien latéral sur une voie de guidage, chacune des roues de guidage (11, 11') de la paire de roues de guidage étant montée sur un bras de suspension (13) qui est, de préférence, articulé sur le corps de guidage (14), sous sollicitation élastique, de façon à pouvoir pivoter dans un plan horizontal.

8. Structure de roulement selon la revendication 7, caractérisée en ce qu'un amortisseur de chocs (16) est disposé entre chacun des bras de suspension (13) et le corps de guidage (14).

9. Structure de roulement selon la revendication 7 ou 8, caractérisée en ce que deux paires de roues de guidage (11, 11', 12, 12') sont montées sur le corps de guidage (14), et en ce que les essieux (42) des roues de guidage sont disposés sensiblement dans la région de la circonférence de la couronne pivotante.

10. Structure de roulement selon l'une des revendications 7 à 9, caractérisée en ce que les deux bras de suspension d'une paire de roues de guidage sont traversés par un tirant commun (22), qui limite le mouvement de pivotement, et en ce qu'un empilage de rondelles-ressorts, maintenu par le tirant, est disposé entre chacun des bras de suspension et le corps de guidage.

11. Structure de roulement selon l'une des revendications 7 à 10, caractérisée en ce qu'un corps coulissant (23) est monté à l'extrémité de chacun des bras de suspension dans une position telle que, dans le cas d'un détachement ou d'une diminution de diamètre de la roue de guidage, il reprenne temporairement la fonction de maintien le long de la voie de guidage.

12. Structure de roulement selon l'une des revendications 7 à 11, caractérisée en ce que le corps oscillant (4) est disposé sur le châssis, entre le corps de guidage (14) et la couronne pivotante.

13. Structure de roulement selon l'une des revendications 7 à 12, caractérisée en ce qu'un dispositif de serrage de câble (24) est monté sur le corps de guidage (14) pour la fixation d'un câble de traction (20).

14. Structure de roulement selon la revendication 13, caractérisée en ce que le dispositif de serrage de câble présente plusieurs étriers de serrage de câble (25), en forme de U, qui sont placés l'un derrière l'autre et qui traversent le corps de guidage (14), une pièce de serrage (26) étant disposée dans chacun des étriers de serrage de câble et la force de serrage, qui s'exerce entre chaque étrier de serrage de câble et sa pièce de serrage, étant réglable depuis un dispositif de tension monté sur le corps de guidage.

15. Structure de roulement selon la revendication 13 ou 14, caractérisée en ce que le câble est introduit dans le dispositif de serrage de câble à travers un organe de guidage à étranglement (30), fixé au corps de guidage (14).

16. Structure de roulement selon l'une des revendications 13 à 15, caractérisée en ce qu'un dispositif de surveillance (40) est monté sur le corps de guidage (14), pour le contrôle de la tension du câble.

17. Structure de roulement selon la revendication 16, caractérisée en ce que le dispositif de surveillance comporte un palpeur (32) placé sous la précontrainte d'un ressort et susceptible de s'immobiliser contre le câble de traction (20), palpeur qui peut être immobilisé dans une position neutre, sous l'influence de la tension du câble, et qui, dans le cas d'un relâchement de la tension du câble, active un dispositif de commutation (34).

18. Structure de roulement selon l'une des revendications 1 à 5, caractérisée en ce qu'au moins un moteur d'entraînement (53), agissant directement ou indirectement sur l'essieu (41) ou sur les roues porteuses (3, 3'), est monté sur le corps oscillant (4).

19. Structure de roulement selon l'une des revendications 1 à 5, caractérisée en ce qu'au moins un moteur d'entraînement (53) est monté sur la superstructure du véhicule, dans une position fixe par rapport à la structure de roulement, et en ce que l'entraînement s'effectue sur l'essieu (41) ou sur les roues porteuses (3, 3'), directement ou indirectement, par l'intermédiaire d'un arbre à cardans (55).

20. Structure de roulement selon l'une des revendications 7 à 12, caractérisée en ce que les roues de guidage d'une paire de roues de guidage sont précontraintes, l'une en direction de l'autre, pour venir en appui contre un rail de guidage (56) s'étendant entre elles.
